# EUROPEAN PATENT APPLICATION

(11) **EP 3 549 838 A1**
(43) Date of publication of application: **09.10.2019**
(21) Application number: 17875686.2
(22) Date of filing: 28.11.2017
(51) Int. Cl.: B60W 30/09, B60R 21/00, B60W 30/12, B60W 30/165, B62D 6/00, G08G 1/16, B62D 101/00, B62D 103/00

(54) **VEHICLE CONTROL DEVICE**

(30) Priority: 29.11.2016 JP 2016231434; 29.11.2016 JP 2016231435
(71) Applicant: Mazda Motor Corporation, Aki-gun, Hiroshima 730-8670 (JP)
(72) Inventor: IIMURA Sahori, Aki-gun Hiroshima 730-8670 (JP); OHMURA Hiroshi, Aki-gun Hiroshima 730-8670 (JP); HOSODA Koji, Aki-gun Hiroshima 730-8670 (JP); TACHIHATA Tetsuya, Aki-gun Hiroshima 730-8670 (JP); NAKAGAMI Takashi, Aki-gun Hiroshima 730-8670 (JP); GOTO Takashi, Aki-gun Hiroshima 730-8670 (JP); KAWAHARA Yasuhiro, Aki-gun Hiroshima 730-8670 (JP); NISHIJO Yuma, Aki-gun Hiroshima 730-8670 (JP)
(74) Representative: Müller-Boré & Partner Patentanwälte PartG mbB
(86) International application number: PCT/JP2017/042606
(87) International publication number: WO 2018/101254

(57) **Abstract**

Disclosed is a vehicle control device (ECU) (10) having plural driving support modes, comprising: an obstacle information detection part (10b) for detecting obstacle information; a traveling regulation information detection part (10c) for detecting traveling regulation information; and a traveling course calculation part (10d) for calculating a future traveling course comprising a target position and a target speed of the vehicle, wherein the calculation part (10d) is operable to: execute, without taking into account the obstacle information, traveling course calculation processing (S13) of calculating traveling courses temporally repeatedly; execute, based on a selected driving support mode, raveling course selection processing (S14) of selecting one of the traveling courses as a target traveling course; and execute, based on the obstacle information and/or the traveling regulation information, traveling course correction processing (S15) of correcting the target traveling course selected in the traveling course selection processing.

## Description

### TECHNICAL FIELD

The present invention relates to a vehicle control device, and more particularly to a vehicle control device for supporting safe traveling of a vehicle.

### BACKGROUND ART

In recent years, techniques regarding automatic driving of a vehicle have been variously proposed. For example, in the following Patent Document 1, there is proposed a technique of, in a situation where a driver intends to change a lane, calculating a target traveling course, using own-vehicle position information from the GPS and map information. In this technique, for example, when an obstacle is detected on a traveling road, one target traveling course is calculated to make a lane change into a neighboring lane so as to avoid the obstacle.

### CITATION LIST

### [Parent Document]

Parent Document 1: JP 2008-149855A

### SUMMARY OF INVENTION

### [Technical Problem]

Assume that, in a vehicle having plural automatic driving modes or driving support modes, only a single target traveling course suited to a selected one of the driving support modes is calculated constantly. In this case, upon a driving support mode switching manipulation according to the will of a driver, it is necessary to newly calculate a target traveling course suited to a switched one of the driving support modes. However, the calculation of the target traveling course requires a certain level of calculation time, so that, during a period from the switching manipulation through until completion of the calculation of the new target traveling course, the switched driving support mode is executed under the absence of the new target traveling course, or the switching between the driving support modes is deferred, i.e., it is unable to quickly respond to a change in driving intension. This is likely to give a driver a feeling of strangeness.

On the other hand, assume that plural target traveling courses suited to all the driving support modes are calculated constantly, while taking into account information regarding a preceding vehicle, an obstacle, a traffic light and the like which can vary temporally. In this case, there is a problem that a calculation load becomes larger.

The present invention has been made to solve such problems, and an object thereof is to provide a vehicle control device capable of facilitating switching to a target traveling course suited to a selected one of plural driving support modes, without an excessively large calculation load.

### [Solution to Technical Problem]

In order to achieve the above object, the present invention provides a vehicle control device having plural driving support modes. The vehicle control device comprises: an obstacle information detection part for detecting obstacle information regarding an obstacle on or around a traveling road on which a vehicle is traveling; a traveling regulation information detection part for detecting traveling regulation information indicating a traveling regulation including a traffic light and a traffic sign on the traveling road; and a traveling course calculation part for calculating a future traveling course comprising a target position and a target speed of the vehicle, wherein the traveling course calculation part is operable to: execute, without taking into account the obstacle information, traveling course calculation processing of calculating plural traveling courses temporally repeatedly; execute, based on a selected one of the driving support modes, traveling course selection processing of selecting one of the plural traveling courses as a target traveling course; and execute, based on the obstacle information and/or the traveling regulation information, traveling course correction processing of correcting the target traveling course selected in the traveling course selection processing.

In the vehicle control device of the present invention having the above feature, each of the plural traveling courses are calculated without taking into account an obstacle which does not exist in a normal state, so that it is possible to reduce a calculation load for calculating the traveling courses. Further, according to this feature, one traveling course (target traveling course) selected from the plural traveling courses is corrected based on obstacle information regarding the detected obstacle, upon detection of an obstacle, or corrected based on traveling regulation information regarding the detected traveling regulation, upon detection of a traveling regulation including a traffic light or a traffic sign. Thus, the calculation for avoiding the obstacle and the calculation for abiding the traveling regulation may be performed with respect to only the selected target traveling course, so that it is possible to suppress an increase in calculation load as a whole. This makes it possible to, in response to a driving support mode switching manipulation, quickly apply a traveling course suited to a switched one of the driving support modes, while avoiding an excessive calculation load.

Preferably, in the vehicle control device of the present invention, the traveling course calculation part is operable to correct the target traveling course based on the obstacle information so as to avoid the obstacle.

Preferably, in the vehicle control device of the present invention, the traveling course calculation part is operable, in the traveling course correction processing, to set a speed distribution zone defining a distribution zone of an allowable upper limit of a relative speed of the vehicle with respect to the obstacle, at least in a range from the obstacle toward the vehicle, and correct the target traveling course so as to inhibit the relative speed of the vehicle with respect to the obstacle from exceeding the allowable upper limit in the speed distribution zone.

According to this feature, the target traveling course is corrected so as to inhibit the relative speed of the vehicle with respect to the obstacle from exceeding the allowable upper limit defined by the speed distribution zone set with respect to the detected obstacle, so that it is possible to avoid the obstacle based on the corrected target traveling course, while maintaining an adequate relative speed and/or distance with respect to the obstacle.

Preferably, in the vehicle control device of the present invention, the plural traveling courses in the traveling course calculation processing are calculated, using one or more selected from the group consisting of traveling road information regarding the traveling road, preceding vehicle trajectory information regarding a traveling trajectory of a preceding vehicle, and traveling behavior information regarding current traveling behavior of the vehicle on the traveling road.

According to this feature, the traveling road information, the preceding vehicle trajectory information and the traveling behavior information can be acquired by using sensors or the like of the vehicle, to calculate the plural traveling courses from the acquired information. Further, according to this feature, it is possible to subject only one traveling course selected from the plural traveling courses to the correction for obstacle avoidance which would otherwise be performed in common with respect to all the plural traveling courses.

Preferably, in the vehicle control device of the present invention, the plural traveling courses to be calculated in the traveling course calculation processing include at least: a first traveling course which is set, based on traveling road information regarding the traveling road, to enable the vehicle to travel within the traveling road; and a second traveling course which is set, based on preceding vehicle trajectory information regarding a traveling trajectory of a preceding vehicle, to enable the vehicle to follow the traveling trajectory of the preceding vehicle.

Preferably, the vehicle control device of the present invention comprises a driver manipulation unit for allowing a passenger to select one of the driving support modes.

According to this feature, it is possible to appropriately select a desired one of the driving support modes, according to a driving support request of the passenger issued through manipulation of the driver manipulation unit by the passenger.

### [Effect of Invention]

The present invention can provide a vehicle control device capable of facilitating switching to a target traveling course suited to a selected one of the plural driving support modes, without an excessively large calculation load.

### BRIEF DESCRIPTION OF DRAWINGS

FIG. 1 is a configuration diagram of a vehicle control system according to one embodiment of the present invention.
FIG. 2 is an explanatory diagram of a first traveling course in this embodiment.
FIG. 3 is an explanatory diagram of a second traveling course in this embodiment.
FIG. 4 is an explanatory diagram of a third traveling course in this embodiment.
FIG. 5 is an explanatory diagram presenting a relationship between a driving support mode and a target traveling course, in this embodiment.
FIG. 6A is an explanatory diagram of a first traveling course correction processing based on traveling regulation information, in this embodiment.
FIG. 6B is an explanatory diagram of the first traveling course correction processing based on the traveling regulation information, in this embodiment.
FIG. 7 is an explanatory diagram of obstacle avoidance control in this embodiment.
FIG. 8 is an explanatory diagram presenting a relationship between an allowable upper limit of a pass-by speed and a clearance between an obstacle and a vehicle in the obstacle avoidance control in this embodiment.
FIG. 9 is a processing flow of driving support control in this embodiment.
FIG. 10 is a processing flow of traveling course selection processing in this embodiment.

### DESCRIPTION OF EMBODIMENTS

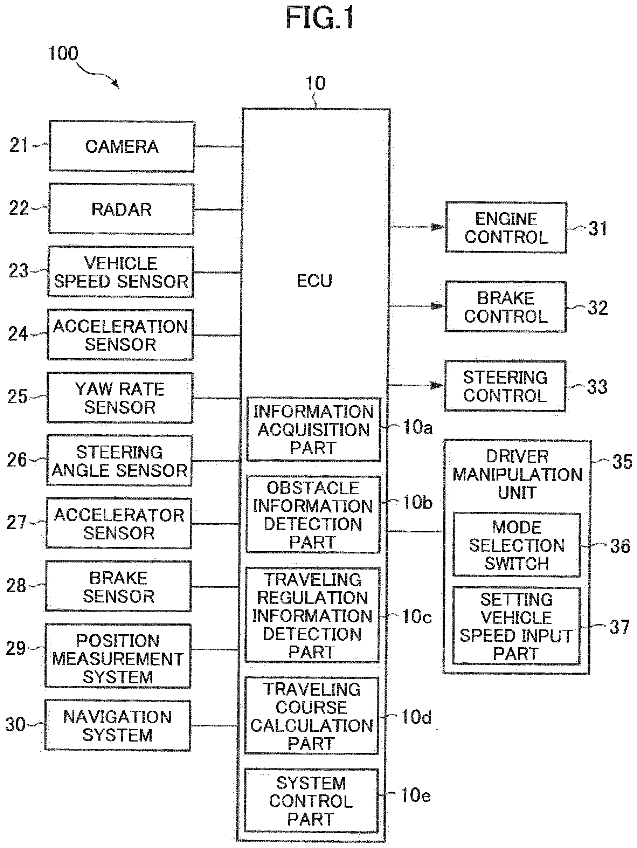

With reference to the accompanying drawings, a vehicle control system according to one embodiments of the present invention will now be described. First of all, the configuration of the vehicle control system will be described with reference to FIG. 1.

FIG. 1 is a configuration diagram of the vehicle control system.

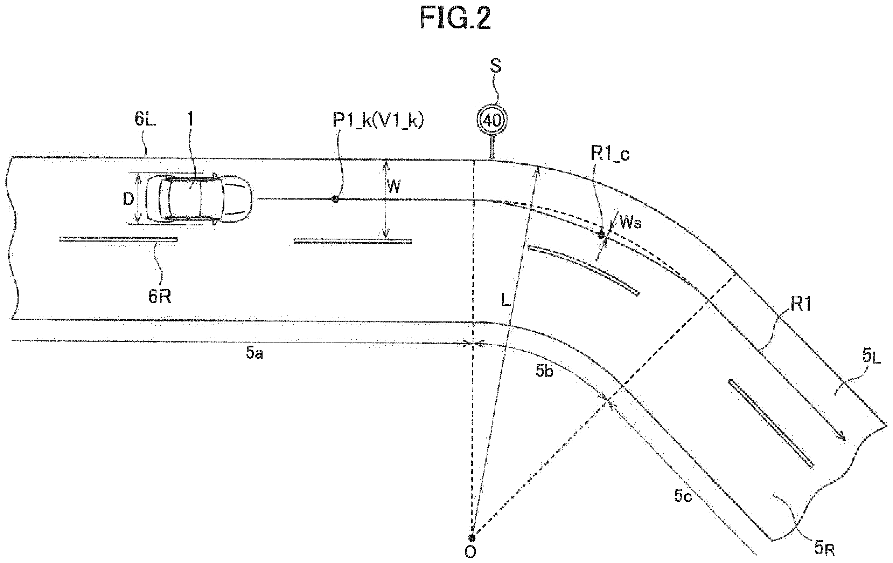

The vehicle control system 100 according to this embodiment is configured to provide different drive support controls to a vehicle 1 (see FIG. 2), based on plural driving support modes, respectively. A driver can select a desired one of the plural driving support modes.

As depicted in FIG. 1, the vehicle control system 100 is equipped in the vehicle (own vehicle) 1, and comprises a vehicle control device (ECU) 10, plural sensors and switches, plural control sub-systems, and a driver manipulation unit 35 for allowing user input regarding the driving support modes. The plural sensors and switches include: a vehicle-mounted camera 21; a millimeter-wave radar 22; plural behavior sensors (a vehicle speed sensor 23, an acceleration sensor 24, and a yaw rate sensor 25) and plural behavior switches (a steering angle sensor 26, an accelerator sensor 27, and a brake sensor 28), a position measurement system 29, and a navigation system 30. Further, the plural control sub-systems include an engine control system 31, a brake control system 32 and a steering control system 33.

The driver manipulation unit 35 is provided in a passenger compartment of the vehicle 1 such that it can be manipulated by the driver, and comprises a mode selection switch 36 for selecting a desired driving support mode from the plural driving support modes, and a setting vehicle speed input part 37 for inputting a setting vehicle speed in accordance with the selected driving support mode. In response to manipulation of the mode selection switch 36 by the driver, a driving support mode selection signal according to the selected driving support mode is output. Further, in response to manipulation of the setting vehicle speed input part 37 by the driver, a setting vehicle speed signal is output.

The ECU 10 is composed of a computer comprising a CPU, a memory storing therein various programs, and an input/output device. The ECU 10 is configured to be operable, based on the driving support mode selection signal and the setting vehicle speed signal received from the driver manipulation unit 35, and signals received from the plural sensors and switches, to output request signals for appropriately operating an engine system, a brake system and a steering system, respectively, to the engine control system 31, the brake control system 32 and the steering control system 33. The ECU 10 functionally comprises an information acquisition part 10a, an obstacle information detection part 10b, a traveling regulation information detection part 10c, a traveling course calculation part 10d, and a system control part 10e. Each of these functional parts executes a corresponding one or more of plural processings in the aftermentioned processing flow.

The vehicle-mounted camera 21 is operable to take images around the vehicle 1 and output image data about the taken image. The ECU 10 (the obstacle information detection part 10b and the traveling regulation information detection part 10c) is operable to identify an object (e.g., a vehicle, a pedestrian, a road, a demarcation line (a lane border line, a white road line or a yellow road line), a traffic light, a traffic sign, a stop line, an intersection, an obstacle or the like) based on the image data. Alternatively or additionally, the ECU 10 may be configured to acquire information regarding such an object from outside via an in-vehicle communication device.

The millimeter-wave radar 22 is a measurement device for measuring the position and speed of the object (particularly, a preceding vehicle, a parked vehicle, a pedestrian, an obstacle or the like), and is operable to transmit a radio wave (transmitted wave) forwardly with respect to the vehicle 1 and receive a reflected wave produced as a result of reflection of the transmitted wave by the object. Then, the millimeter-wave radar 22 is operable, based on the transmitted wave and the received wave, to measure a distance between the vehicle 1 and the object, i.e., a vehicle-object distance, (e.g., inter-vehicle distance) and/or a relative speed of the object with respect to the vehicle 1. In this embodiment, instead of the millimeter-wave radar 22, a laser radar, an ultrasonic sensor or the like may be used to measure the vehicle-object distance and/or the relative speed. Further, the position and speed measurement device may be composed using a plurality of sensors.

The vehicle speed sensor 23 is operable to detect an absolute speed of the vehicle 1.

The accelerator sensor 24 is operable to detect an acceleration (a longitudinal acceleration/deceleration in a longitudinal (forward-rearward) direction, and a lateral acceleration in a lateral (width) direction) of the vehicle 1.

The yaw rate sensor 25 is operable to detect a yaw rate of the vehicle 1.

The steering angle sensor 26 is operable to detect a turning angle (steering angle) of a steering wheel of the vehicle 1.

The accelerator sensor 27 is operable to detect a depression amount of an accelerator pedal.

The brake sensor 28 is operable to detect a depression amount of a brake pedal.

The position measurement system 29 is composed of a GPS system and/or a gyro system, and is operable to detect the position of the vehicle 1 (current vehicle position information).

The navigation system 30 stores therein map information, and is operable to provide the map information to the ECU 10. Then, the ECU 10 is operable, based on the map information and the current vehicle position information, to identify a road, an intersection, a traffic light, a building and others existing around the vehicle 1 (particularly, ahead of the vehicle 1 in the travelling direction). The map information may be stored in the ECU 10.

The engine control system 31 comprises a controller for controlling an engine of the vehicle 1. The ECU 10 is operable, when there is a need to accelerate or decelerate the vehicle 1, to output, to the engine control system 31, an engine output change request signal for requesting to change an engine output.

The brake control system 32 comprises a controller for controlling a braking device of the vehicle 1. The ECU 10 is operable, when there is a need to decelerate the vehicle 1, to output, to the brake control system 32, a braking request signal for requesting to generate a braking force to be applied to the vehicle 1.

The steering control system 33 comprises a controller for controlling a steering device of the vehicle 1. The ECU 10 is operable, when there is a need to change the travelling direction of the vehicle 1, to output, to the steering control system 33, a steering direction change request signal for requesting to change a steering direction.

Next, the driving support modes in the vehicle control system 100 according to this embodiment will be described. In this embodiment, the driving support modes consist of four modes (a preceding vehicle following mode, an automatic speed control mode, a speed limiting mode, and a basic control mode).

Firstly, the preceding vehicle following mode is a mode in which the vehicle 1 is basically controlled to travel following a preceding vehicle, while maintaining a given inter-vehicle distance between the vehicle 1 and the preceding vehicle, and involves automatic steering control, automatic vehicle speed control (engine control and/or brake control), automatic obstacle avoidance control (the vehicle speed control and the steering control) to be executed by the vehicle control system 100.

In the preceding vehicle following mode, the steering control and the vehicle speed control are performed in different manners, depending on detectability of opposed lane edges, and the presence or absence of a preceding vehicle. Here, the term "opposed lane edges" means opposed edges (a demarcation line such as a white road line, a road edge, an edge stone, a median strip, a guardrail or the like) of a lane on which the vehicle 1 is traveling, i.e., borderlines with respect to a neighboring lane and sidewalk, or the like. The ECU 10 is operable, when serving as a traveling road edge detection part, to detect the opposed lane edges from the image data about the image taken by the vehicle-mounted camera 21. Alternatively, the ECU 10 may be configured to detect the opposed lane edges from the map information of the navigation system 30. However, for example, in a situation where the vehicle 1 is traveling on the plain on which there is no traffic lane, instead of on a well-maintained road, or in a situation where reading of the image data from the vehicle-mounted camera 21 is bad, there is a possibility of failing to detect the opposed lane edges.

As above, in this embodiment, the ECU 10 is configured to serve as the traveling road edge detection part. Alternatively, the vehicle-mounted camera 21 may be configured to detect the opposed lane edges to serve as the traveling road edge detection part, or may be configured to detect the opposed lane edges in cooperation with the ECU 10 to serve as the traveling road edge detection part.

Further, the ECU 10 is operable, when serving as a preceding vehicle detection part, to detect a preceding vehicle, based on the image data from the vehicle-mounted camera 21, and the measurement data from the millimeter-wave radar 22. Specifically, the ECU 10 is operable to detect a second vehicle which is traveling ahead of the vehicle 1, as a preceding vehicle, based on the image data from the vehicle-mounted camera 21. Further, in this embodiment, the ECU 10 is operable, when the inter-vehicle distance between the vehicle 1 and the second vehicle is determined to be equal to or less than a given value (e.g., 400 to 500 m), based on the measurement data from the millimeter-wave radar 22, to detect the second vehicle as a preceding vehicle.

As above, in this embodiment, the ECU 10 is configured to serve as the preceding vehicle detection part. Alternatively, the vehicle-mounted camera 21 may be configured to detect a second vehicle which is traveling ahead of the vehicle 1 to serve as the preceding vehicle detection part, or the preceding vehicle detection part may be composed of not only the ECU 10 but also the vehicle-mounted camera 21 and the millimeter-wave radar 22.

In the case where the opposed lane edges are detected, the steering control is performed such that the vehicle 1 is steered to travel along approximately the middle of the lane, and the vehicle speed control is performed such that the vehicle 1 maintains a setup vehicle speed (constant speed) preliminarily set by the driver through the use of the setting vehicle speed input part 37 or by the system 100 based on given processing. Here, when the setup vehicle value is greater than a speed limit (which is determined according to a speed sign or the curvature of a curve), the vehicle speed of the vehicle 1 is limited to the speed limit. When the speed limit is determined according to the curvature of a curve, it is calculated by a given calculation formula, wherein it is set to a lower value as the curvature of the curve becomes larger (a curvature radius of the curve becomes smaller).

Further, when the setup vehicle speed of the vehicle 1 is greater than the vehicle speed of a preceding vehicle, the vehicle speed control is performed such that the vehicle 1 follows the preceding vehicle while maintaining an inter-vehicle distance appropriate to a follow-up vehicle speed. Then, when the preceding vehicle being followed by the vehicle 1 disappears from ahead of the vehicle 1 due to lane change or the like, the vehicle speed control is performed such that the vehicle 1 maintains the setup vehicle speed, again.

On the other hand, in a case where the opposed lane edges are not detected, and there is a preceding vehicle, the steering control is performed such that the vehicle 1 follows a traveling trajectory of the preceding vehicle, and the vehicle speed control is performed such that the vehicle 1 follows the speed on the traveling trajectory of the preceding vehicle.

Further, in a case where the opposed lane edges are not detected, and there is not any preceding vehicle (it is unable to detect any demarcation line and follow any preceding vehicle), it is unable to determine a traveling position on a traveling road. In this case, the driver manually controls vehicle steering and vehicle speed by manipulating the steering wheel, and the accelerator pedal and/or brake pedal so as to maintain or change a current traveling behavior (steering angle, yaw rate, vehicle speed, acceleration/deceleration, or the like) according to the will of the driver.

Differently from the steering control and the vehicle speed control, in the preceding vehicle following mode, the obstacle avoidance control (the engine control and the steering control) described in detail later is executed automatically, irrespective of the presence or absence of a preceding vehicle, and the detectability of the opposed lane edges.

Secondly, the automatic speed control mode is a mode in which the vehicle speed control is performed such that the vehicle 1 maintains a given setup vehicle speed (constant speed) preliminarily set by the driver or the system 100, and involves the automatic vehicle speed control (the engine control and/or the brake control), and the automatic obstacle avoidance control (the vehicle speed control) to be executed by the vehicle control system 100, without involving the automatic steering control. In the automatic speed control mode, although the vehicle 1 travels to maintain the setup vehicle speed, the driver can increase the vehicle speed beyond the setup speed by depressing the accelerator pedal. Further, when the driver performs brake manipulation, the highest priority is given to the will of the driver, and therefore the vehicle 1 is decelerated from the setup vehicle speed. In the automatic speed control mode, when the vehicle 1 catches up to a preceding vehicle, the vehicle speed control is performed such that the vehicle 1 follows the preceding vehicle while maintaining an inter-vehicle distance appropriate to a follow-up vehicle speed, and then when the preceding vehicle disappears, the vehicle speed control is performed such that the follow-up vehicle speed is returned to the setup vehicle speed.

Thirdly, the speed limiting mode is a mode in which the vehicle speed control is performed to prevent the vehicle speed of the vehicle 1 from a setup speed set according to a speed sign or by the driver, and involves the automatic vehicle speed control (engine control) to be executed by the vehicle control system 100. With respect to the speed limit, the ECU 10 may be configured to subject image data about an image of a speed sign or a speed marking on a road surface taken by the vehicle-mounted camera 21, to image recognition processing, to identify the speed limit, or may be configured to receive information regarding the speed limit from outside via a wireless communication. In the speed limiting mode, even when the driver depresses the accelerator pedal so as to to increase the vehicle speed beyond the speed limit, the vehicle speed of the vehicle 1 is increased only up to the speed limit.

Fourthly, the basic control mode is a mode (off mode) in which none of the driving support modes is selected through the driver manipulation unit 35, and the automatic steering control and vehicle speed control are not executed by the vehicle control system 100. However, the basic control mode is configured to execute an automatic anti-collision control. In this anti-collision control, when the vehicle 1 encounters a situation where it is likely to collide with a preceding vehicle or the like, the brake control is automatically executed to avoid the collision. It should be noted that the anti-collision control is also executed in the preceding vehicle following mode, the automatic speed control mode, and the speed limiting mode.

Further, the obstacle avoidance control (only the vehicle speed control, or the engine control and the steering control) described in detail later is further executed in each of the automatic speed control mode, the speed limiting mode and the basic control mode.

Next, with reference to FIGS. 2 to 4, plural traveling courses to be calculated in the vehicle control system 100 according to this embodiment will be described. FIGS. 2 to 4 are explanatory diagrams of first to third traveling courses, respectively. In this embodiment, the ECU 10 is configured to calculate the first to third traveling courses R1 to R3 temporally repeatedly (e.g., at intervals of 0.1 sec). In this embodiment, the ECU 10 is operable, based on information from the sensors and others, to calculate a traveling course in a period from a present time through until a given time period (e.g., 2 to 4 sec) elapses. The traveling course Rx (where x = 1, 2, 3) is defined by a target position (Px_k) and a target speed (Vx_k) (where k = 0, 1, 2, ----, n) of the vehicle 1 on the traveling course.

Each of the traveling courses (first to third traveling courses) in FIGS. 2 to 4 is calculated based on the shape of a traveling road on which the vehicle 1 is traveling, the traveling trajectory of a preceding vehicle, the traveling behavior of the vehicle 1, and the setup vehicle speed, without taking into account obstacle information regarding an obstacle (including a parked vehicle, a pedestrian and the like) on the traveling road or around the traveling road (i.e., information regarding an obstacle whose situation can vary temporally), and traveling situation change information regarding a change in traveling situation. The traveling situation change information may include traveling regulation information regarding traveling regulation according to traffic regulations (a traffic light, a traffic sign and the like) (i.e., information detectable on site during traveling, instead of the map information), and lane change request information according to the will of the driver (the will to change a course, such as manipulation of a winker (turning signal)). As above, in this embodiment, the traveling course is calculated without taking into account the obstacle information, the traveling regulation information and the like, so that it is possible to keep down the overall calculation load for calculating the plural traveling courses.

For the sake of facilitating understanding, the following description will be made based on an example where each of the traveling courses is calculated on the assumption that the vehicle 1 travels on a road 5 consisting of a straight section 5a, a curve section5b, a straight section 5c. The road 5 comprises left and right lanes 5L, 5R. Assume that, at a present time, the vehicle 1 travels on the lane 5L in the straight section 5a.

As depicted in FIG. 2, the first traveling course R1 is set, by a distance corresponding to a given time period, to enable the vehicle 1 to maintain traveling within the lane 5L serving as the traveling road, in conformity to the shape of the road 5. Specifically, the first traveling course R1 is set, in each of the straight sections 5a, 5c, to enable the vehicle 1 to maintain traveling along approximately the widthwise middle of the lane 5L, and set, in the curve section 5b, to enable the vehicle 1 to travel on an inner side or in-side (on the side of a center O of a curvature radius R of the curve section 5b) with respect to the widthwise middle of the lane 5.

The ECU 10 is operable to execute the image recognition processing for image data about an image around the vehicle 1 taken by the vehicle-mounted camera 21, to detect opposed lane edges 6L, 6R. The opposed lane edges are a demarcation line (white road line or the like), and a road shoulder or the like, as mentioned above. Further, the ECU 10 is operable, based on the detected opposed lane edges 6L, 6R, to calculate a lane width W of the lane 5L and the curvature radius R in the curve section 5b. Alternatively, the ECU 10 may be configured to acquire the lane width W and the curvature radius R from the map information of the navigation system 30. Further, the ECU 10 is operable to read, from the image data, a speed limit indicated by a speed sign S or on the road surface. Alternatively, the ECU 10 may be configured to acquire the speed limit from outside via a wireless communication, as mentioned above.

With regard to the straight sections 5a, 5c, the ECU 10 is operable to set a target position P1_k of the first traveling course R1 plurally to enable a widthwise middle (e.g., the position of the center of gravity) of the vehicle 1 to pass through the widthwise middle between the opposed lane edges 6L, 6R. In this embodiment, the ECU 10 is operable to set the first traveling course R1 to enable the vehicle 1 to travel along the middle of the lane in each of the straight sections, as mentioned above. Alternatively, the ECU 10 may be configured to set the first traveling course R1 while reflecting a driving characteristic (preference or the like) of the driver, for example, such that the first traveling course R1 extends along a line adjacent to the middle of the lane and offset in the width direction by a given shift amount (given distance) with respect to the middle of the lane.

On the other hand, with respect to the curve interval 5b, the ECU 10 is operable to maximally set a displacement amount Ws toward the in-side from the widthwise middle position of lane 5L at a longitudinal middle position P1_c of the curve interval 5b. This displacement amount Ws is calculated based on the curvature radius R, the lane width W, and a width dimension D of the vehicle 1 (prescribed value stored in the memory of the ECU 10). Then, the ECU 10 is operable to set the target position P1_k of the first traveling course R1 plurally in such a manner as to smoothly connect the longitudinal middle position P1_c of the curve section 5b to the widthwise middle position of each of the straight sections 5a, 5b. Here, it should be understood that the first traveling course R1 may also be offset toward the in-side in the straight sections 5a 5c at positions before entering the curve section 5b and after exiting the curve section 5b.

Basically, a target speed V1_k at the target position P1_k of the first traveling course R1 is set to a given setup vehicle speed (constant speed) preliminarily set by the driver through the use of the setting vehicle speed input part 37 of the driver manipulation unit 35 or by the system 100. However, when this setup vehicle speed exceeds the speed limit acquired from a speed sign or the like, or the speed limit determined according to the curvature radius R of the curve section 5b, the target speed V1_k at the target position P1_k on the traveling course is limited to a lower one of the two speed limits. Further, the ECU 10 is operable to correct the target position P1_k and the target speed V1_k, according to a current behavior state (i.e., vehicle speed, acceleration/deceleration, yaw rate, steering angle, lateral acceleration, etc.) of the vehicle 1. For example, when a current value of the vehicle speed is largely different from the setup vehicle speed, the target vehicle speed is corrected so as to enable the vehicle speed to come close to the setup vehicle speed.

Basically, the first traveling course R1 is used in the situation where the opposed lane edges are detected. Thus, in a situation where the opposed lane edges are not detected, the first traveling course R1 needs not be calculated. However, in preparation for a situation where the first traveling course R1 is erroneously selected even though the opposed lane edges are not detected, the first traveling course R1 may be calculated in the following alternative manner.

In such a situation, the ECU 10 is operable, assuming that the vehicle 1 travels along the middle of the lane 5L, set virtual opposed lane edges, using the steering angle or yaw rate according to the vehicle speed of the vehicle 1. Then, the ECU 10 is operable, based on the virtually-set opposed lane edges, to calculate the first traveling course to enable the vehicle 1 to travel along the middle of the lane, in each of the straight sections and travel on the in-side of the lane, in the curve section.

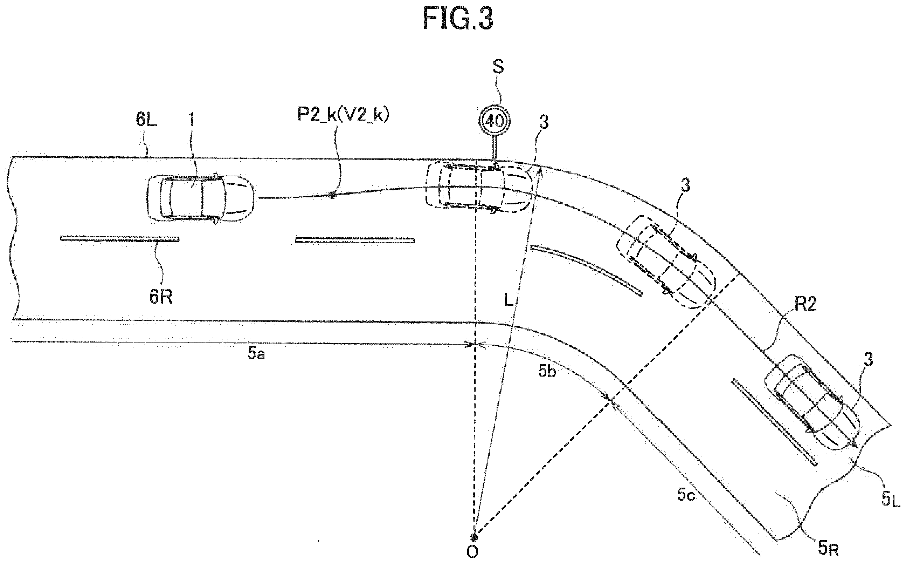

As depicted in FIG. 3, the second traveling course R2 is set, by a distance corresponding to a given time period, to enable the vehicle 1 to follow a traveling trajectory of a preceding vehicle 3. The ECU 10 is operable to continuously calculate the position and speed of the preceding vehicle 3 on the lane 5L on which the vehicle 1 is traveling, based on the image data from the vehicle-mounted camera 21, the measuring data from the millimeter-wave radar 22, and the vehicle speed of the vehicle 1 from the vehicle speed sensor 23, and store the calculated position and speed as preceding vehicle trajectory information, and, based on the preceding vehicle trajectory information, to set the traveling trajectory of the preceding vehicle 3 as the second traveling course R2 (a target position P2_k and a target speed V2_k).

Basically, the second traveling course R2 is a traveling course to be calculated in the situation where a preceding vehicle is detected. Thus, in a situation where no preceding vehicle is detected, the second traveling course R2 needs not be calculated. However, in preparation for a situation where the second traveling course R2 is erroneously selected even though no preceding vehicle is detected, the second traveling course R2 may be calculated in the following alternative manner.

In such a situation, the ECU 10 is operable, assuming that a preceding vehicle is traveling at a position ahead of the vehicle 1 by a given distance according to the vehicle speed of the vehicle 1. Further, assume that this virtual preceding vehicle has the same traveling behavior (vehicle speed, steering angle, yaw rate, etc.) as that of the vehicle 1. Then, the ECU 10 is operable to calculate the second traveling course R2 to follow the virtual preceding vehicle.

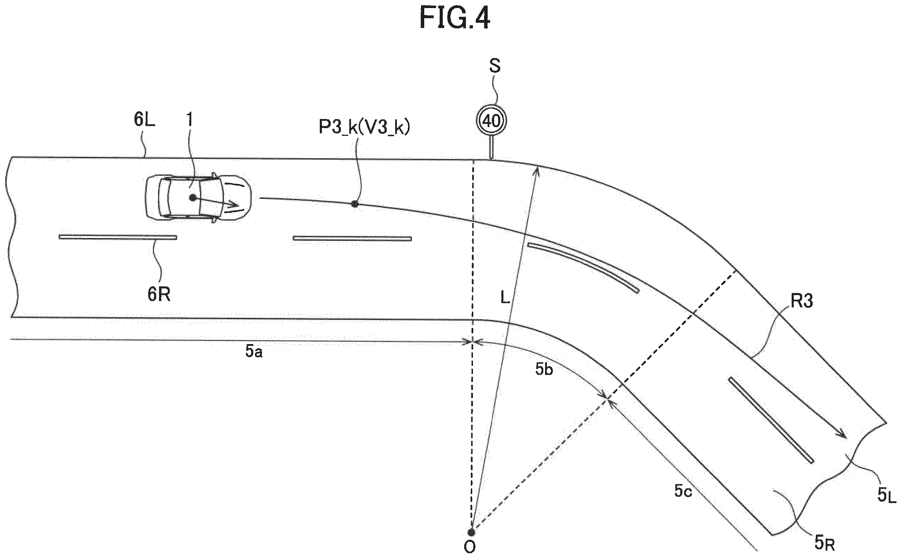

As depicted in FIG. 4, the third traveling course R3 is set, by a distance corresponding to a given time period, based on a current driving state of the vehicle 1 by the driver. Specifically, the third traveling course R3 is set based on a position and a speed estimated from a current traveling behavior of the vehicle 1.

The ECU 10 is operable, based on the steering angle, the yaw rate and the lateral acceleration of the vehicle 1, to calculate a target position P3_k of the third traveling course R3 having the distance corresponding to the given time period. However, in the situation where the opposed lane edges are detected, the ECU 10 is operable to correct the target position P3_k so as to prevent the calculated third traveling course R3 from coming close to or intersecting with any of the lane edges.

Further, the ECU 10 is operable, based on current values of the vehicle speed and the acceleration/deceleration of the vehicle 1, to calculate a target speed V3_k of the third traveling course R3 having the distance corresponding to the given time period. Here, when the target speed V3_k exceeds the speed limit acquired from the speed sign S or the like, the target speed V3_k may be corrected so as not to exceed the speed limit.

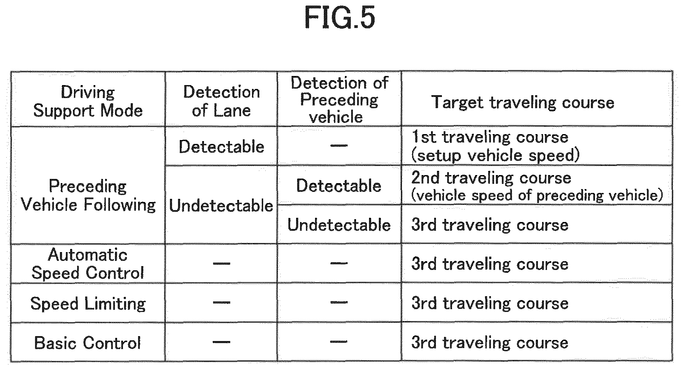

Next, with reference to FIG. 5, a relationship between the driving support mode and the target traveling course in the vehicle control system 100 will be described. FIG. 5 is an explanatory diagram presenting the relationship between the driving support mode and the target traveling course. In this embodiment, the vehicle control system 100 is configured such that, when the driver manipulates the mode selection switch 36 to select one of the driving support modes, the ECU 10 operates to select one of the first to third traveling courses R1 to R3 according to the measurement data from sensors and others. That is, in this embodiment, even when the driver selects a certain one of the driving support modes, the same traveling course is not always applied, but one of the traveling courses appropriate to to a current traveling state is applied.

When the opposed lane edges are detected in a situation where the preceding vehicle following mode is selected, the first traveling course is applied, irrespective of the presence or absence of a preceding vehicle. In this case, the setup speed set through the use of the setting vehicle speed input part 37 is used as the target speed.

On the other hand, when the opposed lane edges are not detected but a preceding vehicle is detected in the situation where the preceding vehicle following mode is selected, the second traveling course is applied. In this case, the target speed is set according to the vehicle speed of the preceding vehicle. Further, when neither the opposed lane edges nor a preceding vehicle is not detected in the situation where the preceding vehicle following mode is selected, the third traveling course is applied.

In the automatic speed control mode which is a mode in which the vehicle speed control is automatically executed, as mentioned above, the setup speed set through the use of the setting vehicle speed input part 37 is used as the target speed. Further, the driver manually controls vehicle steering by manipulating the steering wheel. Thus, although the third traveling course is applied, the vehicle 1 is likely not to travel along the third traveling course, depending on the driver's manipulation (of the steering wheel and/or the brake pedal).

Further, in a situation where the speed limiting mode is selected, the third traveling course is applied. In the speed limiting mode which is a mode in which the vehicle speed control is automatically executed, as mentioned above, the target speed is set according to the depression amount of the accelerator pedal by the driver, within the speed limit. Further, the driver manually controls vehicle steering by manipulating the steering wheel. Thus, although the third traveling course is applied as with the automatic speed control mode, the vehicle 1 is likely not to travel along the third traveling course, depending on the driver's manipulation (of the steering wheel the brake pedal, and/or the accelerator pedal).

Further, in a situation where the basic control mode (off mode) is selected, the third traveling course is applied. The basic control mode is basically the same as the speed limiting mode in a state in which no speed limit is set.

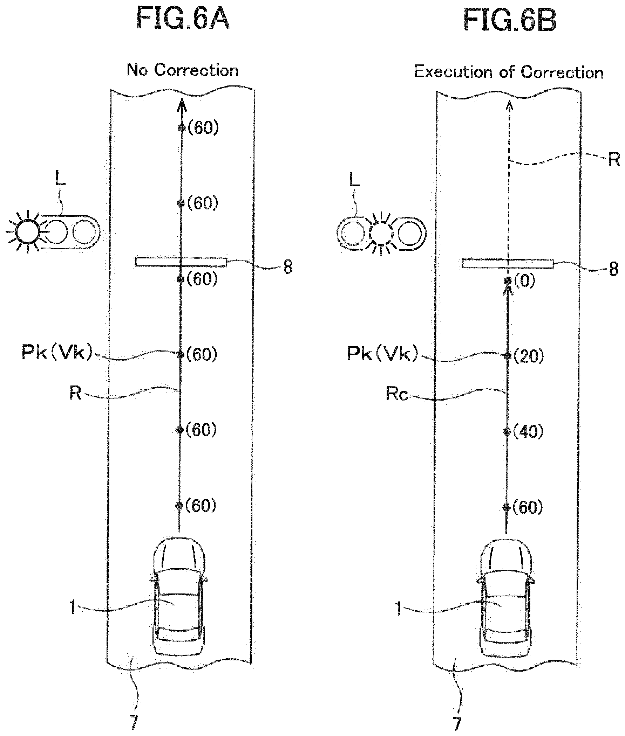

Next, with reference to FIGS. 6A and 6B, traveling course correction processing (first traveling course correction processing) to be executed according to a change in the traveling state, in the vehicle control system 100 according to this embodiment, will be described. FIGS. 6A and 6B are explanatory diagrams of the first traveling course correction processing based on the traveling regulation information (red light). One target traveling course (one of the first to third traveling courses) applied according to the driving support mode selected by the driver is corrected by the first traveling course correction processing). The first traveling course correction processing is executed based on a change in the traveling state, specifically, detection of a traveling regulation based on traffic regulations, such as a traffic light, a road (traffic) sign (temporary stop sign) or the like, and/or detection of a lane change request according to the will of the driver.

In FIGS. 6A and 6B, assume that the vehicle 1 is traveling at a constant speed (e.g., 60 km/h) on a traveling road (lane) 7, and the target traveling course R is calculated according to a selected one of the driving support modes. In FIGS. 6A and 6B, although a traffic light L exists ahead of the vehicle 1, the calculation of the target traveling course R is performed without taking into account the traffic light L, as mentioned above.

In FIG. 6A, the calculated target traveling course R extends linearly along the traveling road 7. At a target position Pk on the target traveling course R, a target speed Vk is set at, e.g., 60 km/h. The ECU 10 operates to detect the presence of the traffic light L, based on the image data from the vehicle-mounted camera 21 (and, if necessary, the measurement data from the millimeter-wave radar 22, and others). In this case, the ECU 10 operates to detect, based on the image data, that the traffic light L is blue light, so that the ECU 10 operates to avoid execution of the correction processing for the target traveling course R.

On the other hand, in FIG. 6B, the calculated target traveling course R is calculated in the same manner as that in FIG. 6A. In this case, however, the ECU 10 operates to detect that the traffic light L is yellow light (or red light). Simultaneously, the ECU 10 operates to detect a stop line 8 in the vicinity of the traffic light L. In this situation, the ECU 10 operates to correct the target traveling course R to enable the vehicle 1 to stop at the stop line so as to observe the traffic light L, and apply the resulting corrected target traveling course Rc. The corrected target traveling course Rc is set to extend from a current position to the stop line 8. Then, the ECU 10 operates to calculate the target speed Vk at the target position Pk such that the target speed Vk is reduced at a given deceleration rate until the vehicle 1 is stopped (reaches 0 km/h) at the stop line 8.

As above, in this embodiment, the traveling regulation information is acquired to appropriately correct the applied target traveling course. Thus, the calculation of the first to third traveling courses can be performed without taking into account the traveling regulation information, so that it is possible to reduce a calculation load of the target traveling course as a whole.

As above, the first traveling course correction processing has been described based on an example where the traveling regulation is a traffic light. However, the first traveling course correction processing can also be applied to a case where the traveling regulation is a road signal ("temporary stop sign" or the like). In a case where the traffic sign indicative of temporary stop can be acquired from the map information, such information may be preliminarily associated with the calculation of the traveling courses to enable the vehicle 1 to be temporality stopped at a stop line. On the other hand, in a case where the traffic sign indicative of temporary stop cannot be acquired from the map information, the ECU 10 operates to execute the target traveling course correction processing when the traffic sign is detected from the image data obtained by the vehicle-mounted camera 21.

The first traveling course correction processing is also executed when the driver manipulates a turning signal lever for lane change. In this case, the ECU 10 operates to detect, based on switch information (lane change request information) from a turning signal sensor (not depicted), that the driver intends to change a current lane to a neighboring lane. Specifically, upon manipulation of the turning signal lever, the ECU 10 is triggered by the switch information from the turning signal sensor to operate to correct the target traveling course to enable the vehicle 1 to move laterally from a current position to the neighboring lane, and apply the resulting corrected target traveling course.

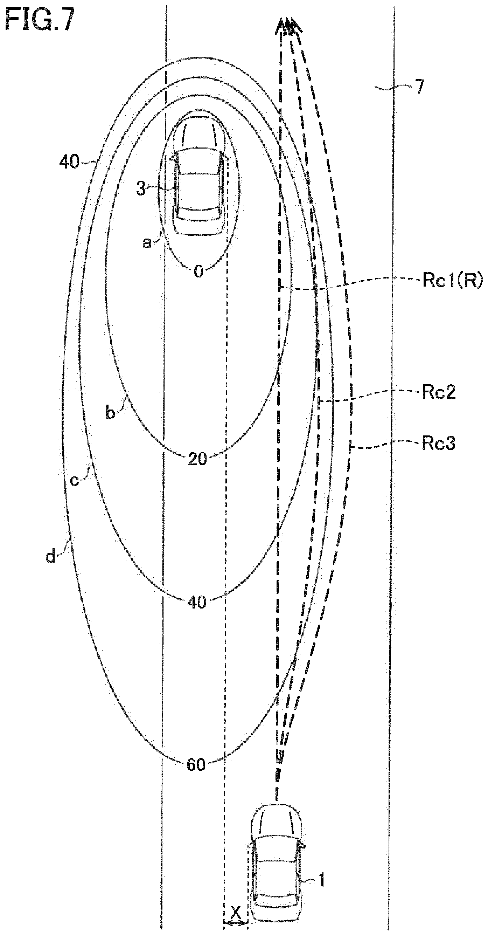

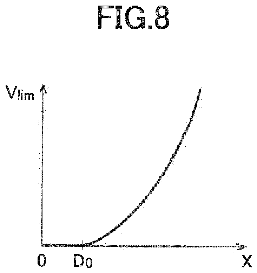

Next, with respect to FIGS. 7 and 8, the obstacle avoidance control and associated traveling course correction processing (second traveling course correction processing) to be executed by the vehicle control system 100 will be described. FIG. 7 is an explanatory diagram of the obstacle avoidance control, and FIG. 8 is an explanatory diagram presenting a relationship between an allowable upper limit of a pass-by speed and a clearance between an obstacle and a vehicle in the obstacle avoidance control.

In FIG. 7, the vehicle 1 is traveling on a traveling road (lane), and is just about passing another vehicle 3 parked at the side of the traveling road 7 and overtaking the parked vehicle 3.

Generally, when passing (or overtaking) an obstacle (e.g., a preceding vehicle, a parked vehicle, or a pedestrian) on or near a road, the driver of the vehicle 1 keeps a given clearance or distance (lateral distance) between the vehicle 1 and the obstacle in a lateral direction orthogonal to a traveling direction of the vehicle 1, and reduces the vehicle speed to a value at which the driver feels safe. Specifically, in order to avoid dangers such as a situation where a preceding vehicle suddenly changes a course, a situation where a pedestrian comes out from a blind spot due to the obstacle, and a situation where a door of a parked vehicle is suddenly opened, the relative speed with respect to the obstacle is set to a lower value as the clearance becomes smaller.

Further, generally, when the vehicle 1 is approaching a preceding vehicle from behind the preceding vehicle, the driver of the vehicle 1 adjusts the vehicle speed (relative speed) according to an inter-vehicle distance (longitudinal distance) along the travelling direction. Specifically, when the inter-vehicle distance is relatively large, an approaching speed (relative speed) is maintained relatively high. However, when the inter-vehicle distance becomes relatively small, the approaching speed is set to a lower value. Subsequently, at a given inter-vehicle distance, the relative speed between the two vehicles is set to zero. This action is the same even when the preceding vehicle is a parked vehicle.

As above, the driver drives the vehicle 1 in such a manner as to avoid dangers while taking into account a relationship between the distance (including the lateral distance and the longitudinal distance) between an obstacle and the vehicle 1, and the relative speed.

Therefore, in this embodiment, as depicted in FIG. 7, the vehicle 1 is configured to set a two-dimensional distribution zone (speed distribution zone 40) defining an allowable upper limit of the relative speed in the travelling direction of the vehicle 1 with respect to an obstacle (such as the parked vehicle 3) detected by the vehicle 1, around the obstacle (over lateral, rear and forward regions around the obstacle) or at least between the obstacle and the vehicle 1. In the speed distribution zone 40, the allowable upper limit Vₗᵢₘ of the relative speed is set at each point around the obstacle. In this embodiment, in all the driving support modes, the obstacle avoidance control is executed to prevent the relative speed of the vehicle 1 with respect to the obstacle from exceeding the allowable upper limit Vₗᵢₘ in the speed distribution zone 40.

As can be understood from FIG. 7, in the speed distribution zone 40, the allowable upper limit of the relative speed is set such that it becomes smaller as the lateral distance and the longitudinal distance from the obstacle become smaller (as the vehicle 1 approaches the obstacle more closely). In FIG. 7, for the sake of facilitating understanding, four constant relative speed lines each connecting the same allowable upper limits are depicted. In this embodiment, the constant relative speed lines a, b, c, d correspond, respectively, to four lines on which the allowable upper limit Vₗᵢₘ is 0 km/h, 20 km/h, 40 km/h and 60 km/h.

Here, the speed distribution zone 40 does not necessarily have to be set over the entire circumference of the obstacle, but may be set at least one (in FIG. 2, right side) of opposite lateral sides of the obstacle on which the vehicle 1 exists. Further, although FIG. 7 depicts the speed distribution zone 40 such that it also covers a region in which the vehicle 1 does not travel (outside the traveling road 7), the speed distribution zone 40 may be set only on the traveling road 7. Further, although FIG. 7 depicts the speed distribution zone 40 defining an allowable upper limit of up to 60 km/h, the speed distribution zone 40 may be set to define a larger relative speed, in consideration of passing with respect to an oncoming vehicle which is traveling on an opposite lane.

As presented in FIG. 8, when the vehicle 1 is traveling at a certain absolute speed, the allowable upper limit Vₗᵢₘ set in the lateral direction of the obstacle is kept at zero when the clearance X is less than D₀ (safe distance), and then quadratically increases when the clearance X becomes equal to or greater than D₀ (Vₗᵢₘ = k (X - D₀)², where X ≥ D₀). That is, when the clearance X is less than D₀, the relative speed of the vehicle 1 becomes zero so as to ensure safety. On the other hand, when the clearance X is equal to or greater than D₀, the vehicle 1 is allowed to pass the obstacle at a larger relative speed as the clearance becomes larger.

In the example depicted in FIG. 8, the allowable upper limit Vₗᵢₘ in the lateral direction of the obstacle is defined as follows: Vₗᵢₘ = f(X) = k (X - D₀)². In this formula, k denotes a gain coefficient related to a degree of change of Vₗᵢₘ with respect to X, and is set depending on a type of obstacle or the like. Similarly, D₀ is set depending on a type of obstacle or the like.

In this embodiment, Vₗᵢₘ includes a safe distance, and is defined as a quadratic function of X, as mentioned above. Alternatively, Vₗᵢₘ needs not include a safe distance, and may be defined as another function (e.g., a linear function). Further, the allowable upper limit Vₗᵢₘ has been described about a region thereof in the lateral direction of the obstacle with reference to FIG. 8, it can be set in the remaining region in all radial directions of the obstacle including the longitudinal direction, in the same manner. In such a case, the coefficient k and the safe distance D₀ may be set depending on a direction from the obstacle.

The speed distribution zone 40 can be set based on various parameters. Examples of the parameter may include the relative speed between the vehicle 1 and an obstacle, the type of obstacle, the traveling direction of the vehicle 1, a moving direction and a moving speed of the obstacle, the length of the obstacle, and the absolute speed of the vehicle 1. That is, based on these parameters, the coefficient k and the safe distance D₀ can be selected.

In this embodiment, the obstacle includes a vehicle, a pedestrian, a bicycle, a cliff, a trench, a hole and a fallen object. The vehicle can be classified into a passenger vehicle, a truck, and a motorcycle. The pedestrian can be classified into an adult, a child and a group.

Further, FIG. 7 depicts one speed distribution zone in a situation where one obstacle exists. Differently, in a situation where plural obstacles exist in adjacent relation, plural speed distribution zones will overlap each other. Thus, in such an overlapping part, the constant relative speed line may be set by preferentially selecting one of two lines having a smaller allowable upper limit while excluding the other, or by smoothly connecting two approximately elliptical shapes, instead of the approximately elliptical-shaped constant relative speed line as depicted in FIG. 7.

As depicted in FIG. 7, when the vehicle 1 is traveling on the traveling road 7, the ECU 10 of the vehicle 1 operates to detect an obstacle (parked vehicle 3) based on the image data from the vehicle-mounted camera 21. At this moment, the type of obstacle (in this example, a vehicle or a pedestrian) is identified.

Further, the ECU 10 operates to calculate the position and the relative speed of the obstacle (parked vehicle 3) with respect to the vehicle 1 and absolute speed of the obstacle, based on the measurement data from the millimeter-wave radar 22 and vehicle speed data from the vehicle speed sensor 23. Here, the position of the object includes a y-directional position (longitudinal distance) along the traveling direction of the vehicle 1, and an x-directional position (lateral distance) along the lateral direction orthogonal to the traveling direction. As the relative speed, a relative speed contained in the measurement data may be directly used, or a component of velocity along the traveling direction may be calculated from the measurement data. Further, although a component of velocity orthogonal to the travelling direction does not necessarily have to be calculated, it may be estimated from plural pieces of measurement data and/or plural pieces of image data, as needed basis.

The ECU 10 operates to set the speed distribution zone 40 with respect to each of one or more detected obstacles (in FIG. 7, the parked vehicle 3). Then, the ECU 10 operates to perform the obstacle avoidance control to prevent the speed of the vehicle 1 from exceeding the allowable upper limit Vₗᵢₘ in the speed distribution zone 40. For this purpose, along with the obstacle avoidance control, the ECU 10 operates to correct the target traveling course applied according to the driving support mode selected by the driver.

Specifically, in a situation where, if the vehicle 1 travels along the target traveling course, the target speed exceeds the allowable upper limit defined in the speed distribution zone 40, at a certain target position, the target speed is reduced without changing the target position (target traveling course Rc1 in FIG. 7), or the target position is changed to a bypass course so as to allow the target speed to avoid exceeding the allowable upper limit (target traveling course Rc3 in FIG. 7) or both the target position and the target speed are changed (target traveling course Rc2 in FIG. 7).

For example, FIG. 7 shows a case where the calculated target traveling course R
is a course which is set such that the vehicle 1 travels along a widthwise middle position of the traveling road 7 (target position) at 60 km/h (target speed). In this case, the parked vehicle 3 as the obstacle exists ahead of the vehicle 1. However, in a step of calculating the target traveling course R, this obstacle is not taken into account to reduce a calculation load, as mentioned above.

When the vehicle 1 travels along the target traveling course R, it will cut across the constant relative speed lines d, c, b, b, c, d of the speed distribution zone 40, in this order. That is, the vehicle 1 being traveling at 60 km/h enters a region inside the constant relative speed line d (allowable upper limit Vₗᵢₘ = 60 km/h). Thus, the ECU 10 operates to correct the target traveling course R so as to restrict the target speed at each target position of the target traveling course R to the allowable upper limit Vₗᵢₘ or less, thereby forming the target traveling course Rc1. That is, in the target traveling course Rc1, as the vehicle 1 approaches the parked vehicle 3, the target speed is reduced to become equal to or less than the allowable upper limit Vₗᵢₘ at each target position, i.e., gradually reduced to less than 20 km/h, and then, as the vehicle 1 travels away from the parked vehicle 3, the target speed is gradually increased to 60 km/h as the original speed.

The target traveling course Rc3 is a course which is set such that the vehicle 1 travels outside the constant relative speed line d (which corresponds to a relative speed of 60 km/h), instead of changing the target speed (60 km/h) of the target traveling course R. The ECU 10 operates to correct the target traveling course R such that the target position is changed to a point on or outside the constant relative speed line d, while maintain the target speed of the target traveling course R, thereby forming the target traveling course Rc3. Thus, the target speed of the target traveling course Rc3 is maintained at 60 km/h as the target speed of the target traveling course R.

The target traveling course Rc2 is a course set by changing both the target position and the target speed of the target traveling course R. In the target traveling course Rc2, instead of maintaining the target speed at 60 km/h, the target speed is gradually reduced to 40 km/h as the vehicle 1 approaches the parked vehicle 3, and then gradually increased to 60 km/h as the original speed as the vehicle 1 travels away from the parked vehicle 3. The target traveling course Rc2 can be formed such that the target position and the target speed thereof satisfy a given condition. For example, the given condition is that each of the longitudinal acceleration/deceleration and the lateral acceleration of the vehicle 1 is equal to or less than a given value, or that there is no departure from the traveling road 7 toward a neighboring lane.

The correction to be achieved by changing only the target speed without changing the target position of the target traveling course R, as in the target traveling course Rc1, can be applied to a driving support mode which involves the vehicle speed control but does not involve the steering control (e.g., the automatic speed control mode, the speed limiting mode, and the basic control mode).

Further, the correction to be achieved by changing only the target position without changing the target speed of the target traveling course R, as in the target traveling course Rc3, can be applied to a driving support mode which involves the steering control (e.g., the preceding vehicle following mode).

Further, the correction to be achieved by changing both the target position and the target speed of the target traveling course R, as in the target traveling course Rc2, can be applied to a driving support mode which involves the vehicle speed control and the steering control (e.g., the preceding vehicle following mode).

Alternatively, ECU 10 may be configured to correct the target traveling course R to any one of the target traveling courses Rc1 to Rc3, according to a driver's preference regarding the avoidance control (e.g., higher-priority item, such as vehicle speed or straight-ahead traveling, selected by the driver), irrespective of whether which of the driving support modes is selected.

The obstacle avoidance control is also applied in a situation where, in the preceding vehicle following mode, the automatic speed control mode, the speed limiting mode or the basic control mode, the vehicle 1 catches up with a preceding vehicle which is traveling on the same lane. Specifically, as the vehicle 1 approaches the preceding vehicle, the vehicle speed of the vehicle 1 is restricted such that the relative speed is reduced in conformity to the allowable upper limit Vₗᵢₘ of the speed distribution zone 40. Then, at a position of the constant relative speed line a on which the relative speed between the vehicle 1 and the preceding vehicle becomes zero, the vehicle 1 follows the preceding vehicle while maintaining a given inter-vehicle distance.

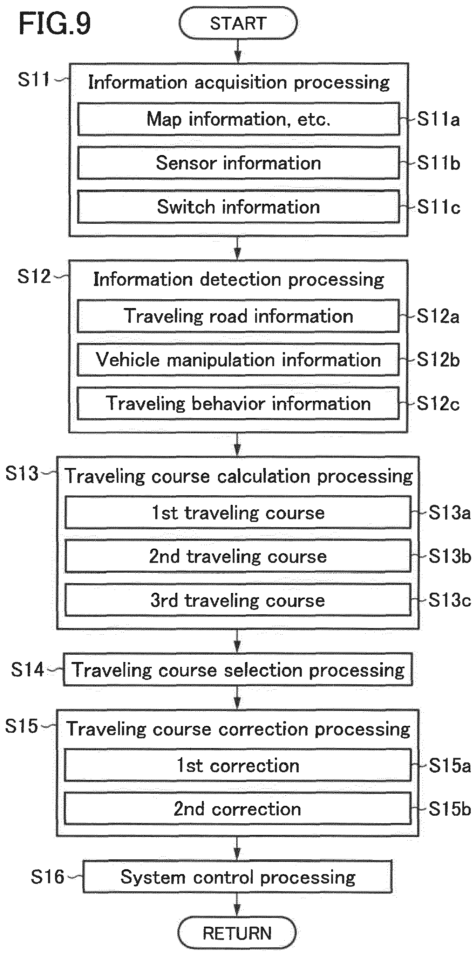

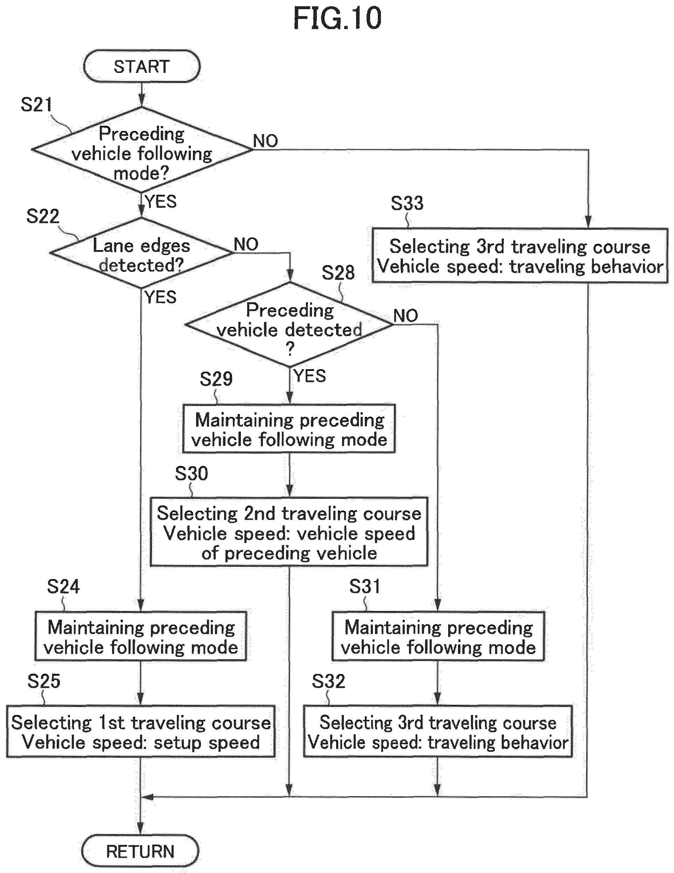

Next, with reference to FIGS. 9 and 10, a processing flow of driving support control in the vehicle control system 100 according to this embodiment will be described. FIG. 9 is the processing flow of the driving support control, and FIG. 10 is a processing flow of traveling course selection processing.

The ECU 10 operates to repeatedly execute the processing flow in FIG. 9 at intervals of a given time period (e.g., 0.1 seconds). First of all, the ECU 10 (information acquisition part 10a) operates to execute information acquisition processing (S11). In the information acquisition processing, the ECU 10 operates to: acquire the current vehicle position information and the map information, from the position measurement system 29 and the navigation system 30 (S11a); acquire sensor information from the vehicle-mounted camera 21, the millimeter-wave radar 22, the vehicle speed sensor 23, the acceleration sensor 24, the yaw rate sensor 25, the driver manipulation unit 35 and others (S11b); and acquire switch information from the steering angle sensor 26, the accelerator sensor 27, the brake sensor 28, the turning signal sensor and others (S11c).

Subsequently, the ECU 10 serving as an information detection part operates to execute given information detection processing (S12), using a variety of information acquired in the information acquisition processing (S11). In the information detection processing, the ECU 10 operates to detect, from the current vehicle position information, the map information and the sensor information, the traveling road information regarding a shape of a traveling road around and ahead of the vehicle 1 (the presence or absence of a straight section and a curve section, the length of each of the sections, the curvature radius of the curve section, a lane width, the positions of opposed lane edges, the number of lanes, the presence or absence of an intersection, a speed limit determined by the curvature of a curve, etc.), the traveling regulation information (speed limit, red light, etc.), the obstacle information (the presence or absence, the position, the speed, etc., of a preceding vehicle or an obstacle), and the preceding vehicle trajectory information (position and speed of a preceding vehicle) (S12a). The obstacle information detection part 10b operates to detect the obstacle information, and the traveling regulation information detection part 10c operates to detect the traveling regulation information.

Further, the ECU 10 operates to: detect, from the switch information, vehicle manipulation information (the steering angle, the accelerator depression amount, the brake pedal depression amount, etc.) (S12b); and detect, from the switch information and the sensor information, the traveling behavior information regarding the behavior of the vehicle 1 (the vehicle speed, the acceleration/deceleration, the lateral acceleration, the yaw rate, etc.) (S12c).

Subsequently, the ECU 10 (traveling course calculation part 10d) operates to execute traveling course calculation processing, based on information obtained by calculation (S13). In the traveling course calculation processing, a first traveling course calculation processing (S13a), a second traveling course calculation processing (S13b) and a third traveling course calculation processing (S13c) are executed in the aforementioned manner.

Specifically, in the first traveling course calculation processing, the ECU 10 operates to calculate, based on the setup vehicle speed, the opposed lane edges, the lane width, the speed limit, the (actual) vehicle speed, the acceleration/deceleration, the yaw rate, the steering angle, the lateral acceleration, etc., the traveling course R1 (target position P1_k and target speed V1_k) by a distance corresponding to a given time period (e.g., 2 to 4 sec), so as to enable the vehicle 1 to travel along approximately the middle of a lane in a straight section, and travel on the in-side of a curve in a curve section to have a larger turning radius, wherein a lowest one of the setup vehicle speed, a speed limit designated by a traffic sign, and a speed limit determined by the curvature of the curve is defined as an upper limit vehicle speed.

In the second traveling course calculation processing, the ECU 10 operates to calculate, based on the preceding vehicle trajectory information (position and speed) of the preceding vehicle acquired from the sensor information, etc., the traveling course R2 by a distance corresponding to a given time period, so as to enable to the vehicle 1 to follow the behavior (position and speed) of the preceding vehicle, while maintaining a given inter-vehicle distance between the preceding vehicle and the vehicle 1, i.e., behind the preceding vehicle by a time necessary to travel over the inter-vehicle distance.

In the third traveling course calculation processing, the ECU 10 operates to calculate the traveling course R3 estimated from a current behavior of the vehicle 1 based on the vehicle manipulation information, the traveling behavior information, etc., by a distance corresponding to a given time period.

Subsequently, the ECU 10 (traveling course calculation part 10d) operates to execute the traveling course selection processing for selecting one target traveling course from the calculated three traveling courses (S14). In this processing, the ECU 10 operates to select the one target traveling course, based on the driving support mode selected by the driver through the use of the mode selection switch 36, detachability of the opposed lane edges, and the presence or absence of a preceding vehicle (see FIG. 5), as described above.

Further, the ECU 10 (traveling course calculation part 10d) operates to execute the traveling course correction processing for correcting the selected target traveling course (S15). This traveling course correction processing comprises the first traveling course correction processing (S15a) and the second traveling course correction processing (S15b), which are appropriately executed as needed basis.

In the first traveling course correction processing, the ECU 10 operates to correct the target traveling course, based on the traveling regulation information (e.g., "red light" depicted in FIG. 6B). Basically, in the first traveling course correction processing, the traveling course is corrected so as to enable the vehicle 1 to stop at a stop line under the vehicle speed control.

On the other hand, in the second traveling course correction processing, the ECU 10 operates to further correct the target traveling course, based on the obstacle information (e.g., the parked vehicle 3 depicted in FIG. 7). Basically, in the second traveling course correction processing, the traveling course is corrected so as to enable the vehicle 1 to avoid the obstacle or follow a preceding vehicle, under the vehicle speed control and/or the steering control, depending on the selected driving support mode.

Preferably, in the traveling course correction processing (S15), the first correction (S15a) is first performed and then the second correction (S15b) is performed. This will be more specifically described by taking as an example a situation where an obstacle (e.g., parked vehicle) exists ahead of the traffic light L (red light) in FIG. 6B. In this situation, when the first correction is first performed and then the second correction (involving the steering control) is performed, the vehicle passes through the traffic light and then the target traveling course is corrected so as to avoid the obstacle. On the other hand, if the second correction is first performed and then the first correction is performed, the target traveling course can be corrected such that the target position is already shifted laterally before a stop position around the red light to avoid the obstacle. Thus, in this case, the vehicle 1 will stop at the stop position around the red light in a manner offset laterally from the middle of the lane.

The above reason will be further described by taking as an example another situation where, when the driver manipulates the turning light lever, there is an obstacle on a neighboring lane after lane change. In this situation, when the first correction is first performed and then the second correction (involving the steering control) is performed, the target traveling course is corrected so as to avoid the obstacle, while the vehicle 1 changes the current lane to the neighboring lane. On the other hand, if the second correction is first performed and then the first correction is performed, the target traveling course is likely to be corrected such that a lane change is performed after the vehicle 1 overtakes the obstacle. This means that a lane change is not performed until the vehicle 1 overtakes the obstacle. That is, the driver's intention is not quickly reflected on the vehicle behavior.

As above, by executing the second correction (S15b) after the first correction (S15a) in the traveling course correction processing (S15), it becomes possible to more naturally correct the target traveling course in conformity to driving intention.

Subsequently, the ECU (system control part 10e) operates to output, according to the selected driving support mode, a request signal to a concerned control sub-system (the engine control system 31, the brake control system 32 and/or the steering control system 33) so as to enable the vehicle 1 to travel on the finally calculated traveling course (S16).

Next, with reference to FIG. 10, a detailed processing flow of the traveling course selection processing (S14) will be described.

First of all, the ECU 10 operates to determine, based on the driving support mode selection signal received from the mode selection switch 36, whether or not the driver selects the preceding vehicle following mode (S21). When the preceding vehicle following mode is determined not to be selected (S21: NO), the ECU 10 operates to select the third traveling course as the target traveling course.

On the other hand, when the preceding vehicle following mode is determined to be selected (S21: YES), the ECU 10 operates to determine, based on the sensor information, etc., whether or not the positions of opposite lane edges are detected (S22). When the positions of opposite lane edges are determined to be detected (S22: YES), the ECU 10 operates to maintain the preceding vehicle following mode as the driving support mode (S24), and select the first traveling course as the target traveling course (S25), irrespective of whether or not a preceding vehicle is detected (irrespective of a result of detection of a preceding vehicle). In this case, target speed is set to the setup vehicle speed.

In this case, the target position is set to approximately the middle of a lane in a straight section, and set on the in-side of the lane in a curve section. Thus, even when a preceding vehicle followed by the vehicle 1 protrudes from a demarcation line (white line or the like) between two lanes or travels on a lane in a zigzag manner, the first traveling course is set so as to enable the vehicle 1 to travel along approximately the middle of the lane, so that it is possible to more sufficiently satisfy a driver's demand for driving and more reliably ensure safety.

On the other hand, when the positions of opposite lane edges are determined not to be detected (S22: NO), the ECU 10 operates to determine, based on the sensor information, etc., whether or not a preceding vehicle is detected (S28).

When a preceding vehicle is determined to be detected (S28: YES) under the condition that the positions of opposite lane edges are not detected, the ECU 10 operates to maintain the preceding vehicle following mode as the driving support mode (S29), and select the second traveling course as the target traveling course (S30). In this case, the target speed and the target position are set so as to enable the vehicle 1 to follow a traveling trajectory of the preceding vehicle.

On the other hand, when a preceding vehicle is determined not to be detected (S28: NO) under the condition that the positions of opposite lane edges are not detected, the ECU 10 operates to maintain the preceding vehicle following mode as the driving support mode (S31), and select the third traveling course as the target traveling course (S32). In this case, the target speed and the target position are set based on a current travelling behavior of the vehicle 1.

In the above embodiment, the ECU 10 is configured to, upon selection of the preceding vehicle following mode, select one of the first to third traveling courses. Alternatively, the ECU 10 may be configured to select one of the first and second traveling courses.

Next, the functions of the vehicle control system of the present invention according to above embodiment will be described.

In the above embodiment, a vehicle control device (ECU) 10 having plural driving support modes comprises: an obstacle information detection part 10b for detecting obstacle information regarding an obstacle on or around a traveling road on which a vehicle 1 is traveling; a traveling regulation information detection part 10c for detecting traveling regulation information indicating a traveling regulation including a traffic light L and a traffic sign on the traveling road; and a traveling course calculation part 10d for calculating a future traveling course comprising a target position P_k and a target speed V_k of the vehicle 1, wherein the traveling course calculation part 10d is operable to: execute, without taking into account the obstacle information, traveling course calculation processing (S13 in FIG. 9) of calculating plural traveling courses temporally repeatedly; execute, based on a selected one of the driving support modes, traveling course selection processing (S14 in FIG. 9, and FIG. 10) of selecting one of the plural traveling courses as a target traveling course; and execute, based on the obstacle information and/or the traveling regulation information, first and second traveling course correction processings (S15a and S15b) of correcting the target traveling course selected in the traveling course selection processing.

Thus, in the above embodiment, each of the plural traveling courses are calculated without taking into account an obstacle which does not exist in a normal state, so that it is possible to reduce a calculation load for calculating the traveling courses. Further, in the above embodiment, one traveling course (target traveling course R) selected from the plural traveling courses is corrected based on obstacle information regarding the detected obstacle, upon detection of an obstacle (e.g., the parked vehicle 3 in FIG. 7), or corrected based on traveling regulation information regarding the detected traveling regulation, upon detection of a traveling regulation including a traffic light L or a traffic sign. Thus, the calculation for avoiding the obstacle and the calculation for abiding the traveling regulation may be performed with respect to only the selected target traveling course R, so that it is possible to suppress an increase in calculation load as a whole. This makes it possible to, in response to a driving support mode switching manipulation, quickly shift a current traveling course to another traveling course suited to a switched one of the driving support modes, while avoiding an excessive calculation load.

In the above embodiment, the traveling course calculation part 10d is operable to correct the target traveling course R based on the obstacle information so as to avoid the obstacle.

In the above embodiment, the traveling course calculation part 10d is operable, in the second traveling course correction processing, to set a speed distribution zone 40 (see FIG. 7) defining a distribution zone of an allowable upper limit Vₗᵢₘ of a relative speed of the vehicle 1 with respect to the obstacle, at least in a range from the obstacle toward the vehicle 1, and correct the target traveling course R so as to inhibit the relative speed of the vehicle 1 with respect to the obstacle from exceeding the allowable upper limit Vₗᵢₘ in the speed distribution zone 40. Thus, in the above embodiment, the target traveling course R is corrected so as to inhibit the relative speed of the vehicle 1 with respect to the obstacle from exceeding the allowable upper limit Vₗᵢₘ defined by the speed distribution zone 40 set with respect to the detected obstacle, so that it is possible to avoid the obstacle based on the corrected target traveling course (Rc1 to Rc3), while maintaining an adequate relative speed and/or distance with respect to the obstacle.

In the above embodiment, the plural traveling courses in the traveling course calculation processing (S13) are calculated, using one or more selected from the group consisting of traveling road information regarding the traveling road (S13a), preceding vehicle trajectory information regarding a traveling trajectory of a preceding vehicle (S13b), and traveling behavior information regarding current traveling behavior of the vehicle on the traveling road (S13c). Thus, in the above embodiment, the traveling road information, the preceding vehicle trajectory information and the traveling behavior information can be acquired by using sensors or the like of the vehicle 1, to calculate the plurality traveling courses (R1 to R3) from the acquired information. Further, in this embodiment, it is possible to subject only one traveling course selected from the plural traveling courses to the correction for obstacle avoidance (S15b) which would otherwise be performed in common with respect to all the plural traveling courses.

In the above embodiment, the plural traveling courses to be calculated in the traveling course calculation processing (S13) include at least: a first traveling course R1 which is set, based on traveling road information regarding the traveling road, to enable the vehicle 1 to travel within the traveling road; and a second traveling course R2 which is set, based on preceding vehicle trajectory information regarding a traveling trajectory of a preceding vehicle, to enable the vehicle 1 to follow the traveling trajectory of the preceding vehicle.

The vehicle control device according to the above embodiment comprises a driver manipulation unit 35 for allowing a passenger to select one of the driving support modes. Thus, in the above embodiment, it is possible to appropriately select a desired one of the driving support modes, according to a driving support request of the passenger issued through manipulation of the driver manipulation unit 35 by the passenger.

### LIST OF REFERENCE SIGNS

1: vehicle
3: vehicle
5: road
5a, 5c: straight section
5b: curve section
5L, 5R: lane
6L, 6R: lane edge
7: traveling road
8: stop line
40: speed distribution zone
a, b, c, d: constant relative speed line
Vₗᵢₘ; allowable upper limit
100: vehicle control system
D: width dimension
D0: safe distance
L: traffic light
L: curvature radius
R: target traveling course
R1: first traveling course
R2: second traveling course
R3: third traveling course
Rc, Rc1, Rc2, Rc3: corrected target traveling course
P_k (P1_k, P2_k, P3_k): target position
V_k (V1_k, V2_k, V3_k): target speed
S: speed sign
W: lane width
Ws: displacement amount
X: clearance

## Claims

1. A vehicle control device having plural driving support modes, comprising:
an obstacle information detection part for detecting obstacle information regarding an obstacle on or around a traveling road on which a vehicle is traveling;
a traveling regulation information detection part for detecting traveling regulation information indicating a traveling regulation including a traffic light and a traffic sign on the traveling road; and
a traveling course calculation part for calculating a future traveling course comprising a target position and a target speed of the vehicle,
wherein the traveling course calculation part is operable to:
execute, without taking into account the obstacle information, traveling course calculation processing of calculating plural traveling courses temporally repeatedly;
execute, based on a selected one of the driving support mode, traveling course selection processing of selecting one of the plural traveling courses as a target traveling course; and
execute, based on the obstacle information and/or the traveling regulation information, traveling course correction processing of correcting the target traveling course selected in the traveling course selection processing.

2. The vehicle control device as defined in claim 1, wherein the traveling course calculation part is operable to correct the target traveling course based on the obstacle information so as to avoid the obstacle.

3. The vehicle control device as defined in claim 1 or 2, wherein the traveling course calculation part is operable, in the traveling course correction processing, to set a speed distribution zone defining a distribution zone of an allowable upper limit of a relative speed of the vehicle with respect to the obstacle, at least in a range from the obstacle toward the vehicle, and correct the target traveling course so as to inhibit the relative speed of the vehicle with respect to the obstacle from exceeding the allowable upper limit in the speed distribution zone.

4. The vehicle control device as defined in any one of claims 1 to 3, wherein the plural traveling courses in the traveling course calculation processing are calculated, using one or more selected from the group consisting of traveling road information regarding the traveling road, preceding vehicle trajectory information regarding a traveling trajectory of a preceding vehicle, and traveling behavior information regarding current traveling behavior of the vehicle on the traveling road.

5. The vehicle control device as defined in any one of claims 1 to 4, wherein the plural traveling courses to be calculated in the traveling course calculation processing include at least:
a first traveling course which is set, based on traveling road information regarding the traveling road, to enable the vehicle to travel within the traveling road; and
a second traveling course which is set, based on preceding vehicle trajectory information regarding a traveling trajectory of a preceding vehicle, to enable the vehicle to follow the traveling trajectory of the preceding vehicle.

6. The vehicle control device as defined in any one of claims 1 to 5, further comprising a driver manipulation unit for allowing a passenger to select one of the driving support modes.
